# EUROPEAN PATENT APPLICATION

(11) **EP 0 750 212 A2**
(43) Date of publication of application: **27.12.1996**
(21) Application number: 96304583.6
(22) Date of filing: 20.06.1996
(51) Int. Cl.: G02F 1/1337

(54) **Liquid crystal display device**

(30) Priority: 22.06.1995 JP 156429/95
(71) Applicant: International Business Machines Corporation, Armonk, N.Y. 10504 (US)
(72) Inventor: Hasegawa, Masaki, Kamakura-shi, Kanagawa-ken (JP)
(74) Representative: Litherland, David Peter

(57) **Abstract**

A liquid crystal display device includes a polymer alignment film which is formed by radiating the film with linearly polarised ultra-violet light. The electric vector direction of the linearly polarized light is rotated so that the polymer alignment film is irradiated by the ultra-violet light diagonally.

## Description

The present invention relates to a method and device for controlling liquid crystal alignment of an alignment film contacting liquid crystal molecules. The present invention also relates to a liquid crystal display device having an alignment film so formed.

The rubbing method has conventionally been used with a liquid crystal alignment film for aligning of a liquid crystal display device. Rubbing is a process step to rub a polymer such as polyimide applied on a glass substrate using short-fiber cloth such as cotton cloth. It is said that liquid crystal molecules align because polymer chains align in a single direction due to abrasion, and fine grooves are formed on the surface. However, although the rubbing method has an advantage that only a simple device is required, this method has a problem in view of static electricity and dust generated during the manufacturing process, and a cleaning step is required for removing static electricity and dust. Therefore, a number of methods for alignment replacing the rubbing method have been proposed.

Methods for alignment which have been proposed include trimetric vapor deposition, the use of an oriented polymer film, the grating method, LB membrane bonding, and the utilization of the optical isomerization of organic molecules. These methods for alignment will be described briefly. Trimetric vapor deposition is a method for the vapor deposition of a metal or the oxide thereof such as SiO₂, Au or Al on a glass substrate from a diagonal direction, thereby forming a trimetric structure on the surface of the glass substrate, and aligning liquid crystal molecules along this structure. Although the pre-tilt angle, which is a slant angle of liquid crystal alignment to the glass substrate, may be controlled by changing the angle of vapor deposition, this method is disadvantageous in that complicated equipment is required for trimetric vapor deposition, and a considerable time is required for forming a desired alignment film.

The use of an oriented polymer film has an disadvantage that a high voltage is required to apply to the liquid crystal display panel because the polymer film becomes thick.

The grating method is a method for forming grooves on a glass substrate using photolithography and replica to align liquid crystal molecules in the direction of the grooves. This method has a disadvantage that the manufacturing process is complicated, and the control of pre-tilt angles is difficult.

LB (Langmuir-Blodgett) membrane bonding is a method in which a well aligned monomolecular membrane consisting of several molecular layers is bonded on a glass substrate, and liquid crystal molecules are aligned by the molecules of the LB membrane. Although the pre-tilt angles may be controlled by changing the molecules of the LB membrane, this method is disadvantageous because it is difficult to form the LB membrane and to bond the LB membrane on the glass substrate.

The utilization of optical isomerization has a problem that the pre-tilt angles cannot be controlled, and although methods using optical polymerization or optical decomposition have been proposed (for example, PUPA No. 5-34,699 filed and laid open on February 12, 1993), reverse-tilt defect may occur because the force of alignment is weak, and no pre-tilt angle is formed.

It is an object of the present invention to provide a method and device for controlling liquid crystal alignment which may prevent the generation of static electricity and dust on the substrate.

It is another object of the present invention to provide a method and device for controlling liquid crystal alignment which may use various polymer materials as materials for the alignment film, and which may control alignment properties.

It is further object of the present invention to provide a method and device for controlling liquid crystal alignment which may easily change the direction of alignment, and which may change the direction of alignment partially on the substrate.

It is further object of the present invention to provide a liquid crystal display device having an alignment film formed by said method for controlling liquid crystal alignment.

The above and other objects are achieved by the method for controlling liquid crystal alignment, comprising irradiating linearly polarized ultra-violet light to a polymer alignment film formed on a substrate, rotating the electric vector direction of the linearly polarized ultra-violet light, and irradiating ultra-violet light diagonally to the polymer alignment film.

The above and other objects are also achieved by a method for controlling liquid crystal alignment, comprising irradiating linearly polarized ultra-violet light to a polymer alignment film formed on a substrate in a predetermined electric vector direction for aligning liquid crystals in the direction perpendicular to the electric vector direction, rotating the electric vector direction about 90 degrees in the surface of the alignment film, and irradiating ultra-violet light diagonally to the polymer alignment film in a polarizing surface to determine a pre-tilt angle.

The above and other objects are also achieved by a device for controlling liquid crystal alignment comprising an ultra-violet light source for radiating linearly polarized ultra-violet light, an irradiating light tilting means for relatively tilting the linearly polarized ultra-violet light radiated from the ultra-violet light source by a predetermined angle to the normal line of a substrate, and an electric vector direction changing means for radiating the ultra-violet light in a predetermined electric vector direction to the reference direction of the substrate.

The above and other objects are further achieved by a liquid crystal display device comprising a polymer alignment film formed by any of the above methods for controlling liquid crystal alignment.

According to the present invention, since the device for controlling liquid crystal alignment does not contact the glass substrate and the alignment film, the generation of static electricity and dust is prevented. Also, since various polymer materials may be used as the materials for the alignment film, the alignment properties may be controlled. Furthermore, since the direction of polarized light may easily changed, the direction of alignment may be changed, and the direction of alignment may also be changed partially on the substrate.

Since only ultra-violet light is irradiated, no other additional process steps are required, and liquid crystal molecules are aligned with a pre-tilt angle, and even if a voltage is applied to the liquid crystal display panel, no defective alignment such as reverse tilt occurs. Although conventional alignment methods using light produce weak alignment force, alignment according to the present invention is the same degree as alignment by the rubbing method.

A preferred embodiment of the invention will now be described, by way of example only, with reference to the accompanying drawings in which:
Figure 1 is a diagram showing a device for controlling liquid crystal alignment according to an embodiment of the present invention;
Figure 2 is a diagram showing a substrate coated by a polymer alignment film;
Figure 3 is a diagram showing a method for controlling liquid crystal alignment according to the embodiment;
Figure 4 is a diagram showing a liquid crystal display device according to an embodiment of the present invention; and
Figure 5 is a diagram illustrating change in the molecular chains of polyimide by the irradiation by linearly polarized ultra-violet light.

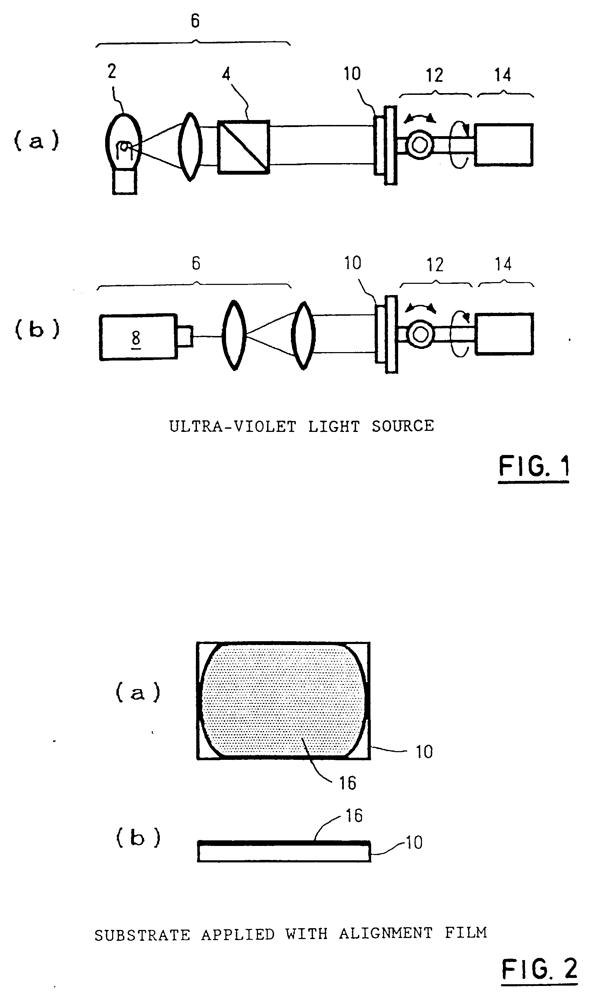

The structure of a device for controlling liquid crystal alignment according to an embodiment of the present invention will be described referring to Figure 1.

The device for controlling liquid crystal alignment according to the embodiment comprises either an ultra-violet light source 6 consisting of the combination of a mercury lamp 2 and a linearly polarizing element 4 such as a Wollaston's prism as shown in Figure 1(a), or an ultra-violet light source 6 which radiates already linearly polarized ultra-violet light such as an ultra-violet laser 8 as shown in Figure 1(b), a means for slanting irradiating light 12 which tilts linearly polarized ultra-violet light radiated from the light source 6 relatively by an optional angle with respect to the normal line of a substrate, and a means for changing the direction of polarized light 14 which makes the polarized light radiate in an optional electric vector direction against the reference direction of the substrate.

Since the means for slanting irradiating light 12 and the means for changing the direction of polarized light 14 may be any structures which can fix the light source, and rotate/slant the irradiated glass substrate relative to the light source, and may be fabricated easily by using a conventional substrate supporting/transferring table or X-Y-Z table, the description of these is omitted in this embodiment.

Next, the method for controlling liquid crystal alignment using the device for controlling liquid crystal alignment according to an embodiment of the present invention will be described referring to Figure 2. Figure 2(a) and Figure 2(b) are a top view and a side view of a substrate to which a polymer alignment film is applied, respectively.

As Figure 2 shows, after a thin polymer alignment film (polyimide, polyvinyl alcohol, etc.) 16 is applied to a substrate 10 such as a glass substrate by a coating method such as spin coating, the alignment film is dried.

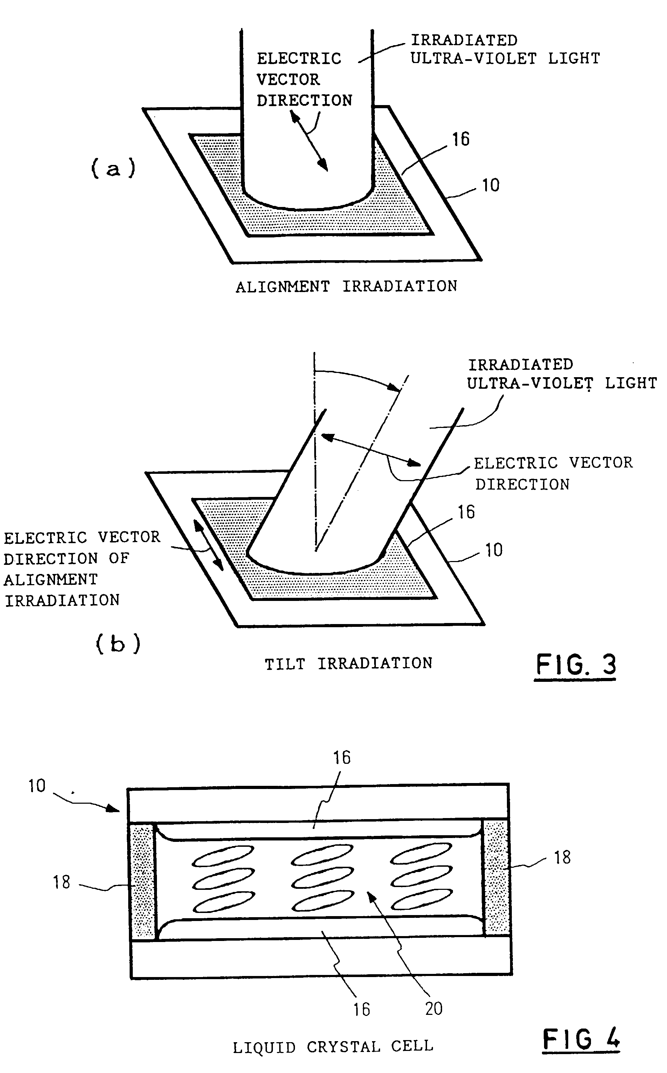

Next, as shown in Figure 3 (a), ultra-violet light with an wavelength which is absorbed in the applied polymer alignment film 16 is irradiated to the polymer alignment film 16 in a linearly polarized state. With this irradiation, the alignment direction in the substrate 10 is perpendicular to the electric vector direction. This irradiation will be referred to as alignment irradiation hereinafter in the embodiment.

Then, a second irradiation of ultra-violet light is performed. In the second irradiation, as shown in Figure 3 (b), the electric vector direction is rotated by 90 degrees to the polarization of the alignment irradiation, and the direction of irradiation is slanted by a predetermined degree to the substrate in a vertical including the electric vector direction. That is, the electric vector direction slants relative to the substrate 10. With the second irradiation, liquid crystal molecules can be aligned with a pre-tilt angle. This second irradiation will be referred to as tilt irradiation hereinafter in this embodiment.

The pre-tilt angle may be controlled depending on the irradiation energy of tilt irradiation and the type of the polymer alignment film such as polyimide. Also, alignment irradiation and tilt irradiation may be performed simultaneously. The polymer alignment film used requires, to be described later, that its molecule chain is broken by the irradiation of ultra-violet light, and that the film is aligned horizontally against liquid crystal molecules. What satisfies these conditions includes positive-type polyimide.

The irradiation time of ultra-violet light depends on the sensitivity of the polymer alignment film to ultra-violet light, and the intensity of ultra-violet light.

After irradiating the polymer alignment films on two glass substrates by ultra-violet light, the two glass substrates are bonded with the polymer alignment films facing to each other at a specified distance (cell gap), and liquid crystals are injected in the space and sealed. In this time, the alignment direction of the polymer alignment films on both substrates is determined so that the desired alignment condition is obtained. The cell gap may be in a range within which liquid crystal molecules are aligned, and in ordinary liquid crystal display devices, the cell gap is between several microns and ten-odd microns. The cell gap is formed by a spacer such as a film and beads.

Figure 4 is a schematic diagram of the liquid crystal display device manufactured by the method for controlling liquid crystal alignment according to this embodiment. Two glass substrates 10 facing to each other at a predetermined cell gap are supported by a spacer 18. Polymer alignment films 16 undergone the alignment treatment of this embodiment are formed inside the both glass substrates 10, between which liquid crystals 20 are sealed.

Liquid crystals 20 sealed in may be in a liquid crystal state or in an isotropic state. The liquid crystals which have become a liquid crystal phase after injection are aligned with a pre-tilt angle by the polymer alignment film 16 on the glass substrate 10. Thus, the horizontal alignment of the liquid crystal molecules in a single direction is achieved without rubbing.

A specific example of the constitution and method described above will be described below. As an ultra-violet light source 6, an ultra-violet laser based on secondary higher harmonics (SHG) was used. The wavelength was 257 nm. For the substrate 10, a glass substrate on which a transparent electrode consisting of indium tin oxide (ITO) had been formed was used. As the polymer alignment film 16 formed on the substrate 10, a soluble polyimide (Optomer AL1256 manufactured by Japan Synthetic Rubber Co., Ltd.) was used.

After the polymer alignment film 16 consisting of the polyimide was applied by spin coating to the ITO of the glass substrate with the electrode 10, the alignment film 16 was baked and dried at 180°C for 1 hour. The coated surface of the polyimide 16 was directed to the ultra-violet light radiating surface of the ultra-violet laser 6, and linearly polarized ultra-violet light was radiated perpendicularly to the substrate 10 in a spot of 18 mW and 8 mm in diameter (32mW/cm²) for 2 minutes.

Next, the direction of electric vector for ultra-violet irradiation was rotated by 90 degrees, and the substrate 10 was slanted by 10 degrees in the polarized surface, and the polyimide 16 was tilt-irradiated by the ultra-violet light for 1 minute.

Polyethylene film of a thickness of 12 µm was sandwiched as a spacer 18 between two substrates 10 thus formed with polyimide 16 sides inside. In this time, the two substrates 10 were bonded so that the directions of electric vector of the ultra-violet light radiated in the second time became parallel to each other, that is, the pre-tilt of liquid crystals became parallel. Liquid crystals 20 as a liquid crystal phase were injected using the capillary action to complete the liquid crystal display device.

The polymer alignment film 16 of the completed liquid crystal display device was observed using a polarizing microscope, and the pre-tilt angle was measured by the crystal rotation method. In the area irradiated by ultra-violet light, the liquid crystals were aligned perpendicularly to the direction of electric vector. The pre-tilt angle was 0.2 degree. when a voltage was impressed to the ITO of the two substrates 10, the alignment of the liquid crystal molecules were slanted, while the direction of the rotation of alignment was the same and not defects occurred due to reverse tilt.

when the similar experiment was carried out by changing the angle of tilt irradiation to 30 degrees, the pre-tilt angle was 0.6 degree. Thus, pre-tilt angles may be controlled by the angle of tilt irradiation.

Theoretically, this embodiment utilizes the anisotropy of the absorption of linearly polarized ultra-violet light by the polymer alignment film. That is, the molecular chain of the polymer alignment film aligned almost parallel to the direction of polarization of the ultra-violet light radiated to the polymer alignment film absorbs more ultra-violet light, and the molecular chain is broken more easily than the molecular chain arranged almost perpendicularly to the direction of electric vector of the ultra-violet light.

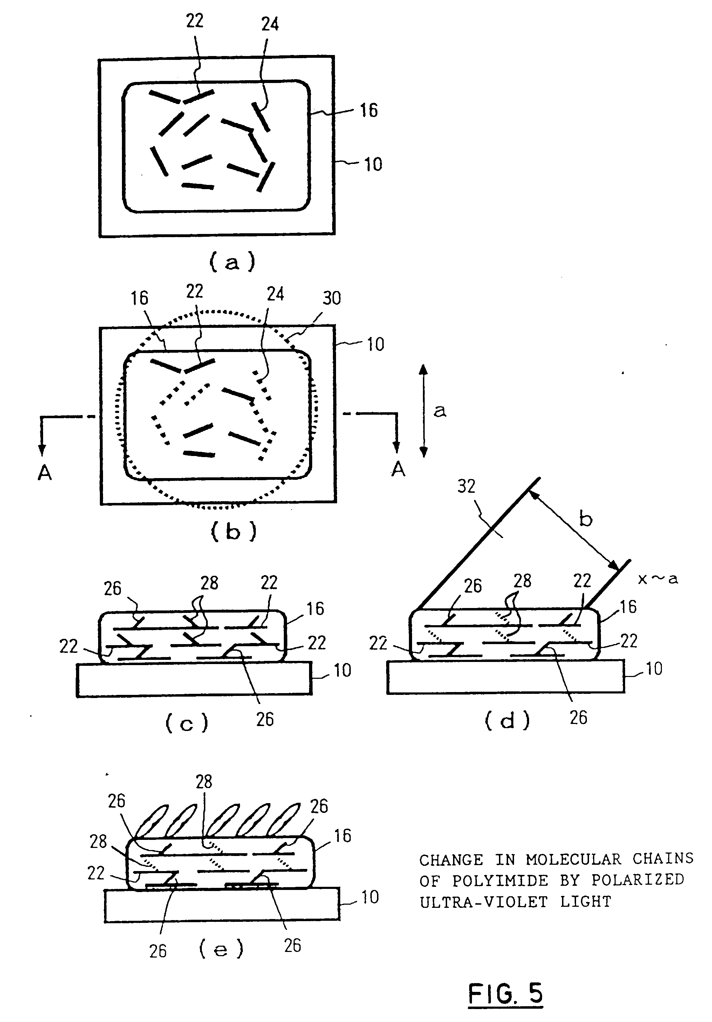

Change in the polyimide molecular chain, which is the polymer alignment film by linearly polarized ultra-violet light will be described referring to Figure 5. Figure 5(a) is a top view of a substrate 10, and shows the condition of a polyimide molecular chain when polyimide, which is a polymer alignment film, is applied by spin coating on the substrate 10.

Figure 5(b) shows the state when the linearly polarized ultra-violet light is radiated from the direction normal to the substrate for alignment irradiation. The region indicated by a broken line 30 is the region of alignment irradiation. The electric vector direction of the radiated ultra-violet light is vertical in Figure 5(b) as the arrow a shows. By such alignment irradiation, the molecular chains 24 of the polymer alignment film 16 almost parallel to the electric vector direction of the radiated ultra-violet light absorb much ultra-violet light and are cut and shortened, while the molecular chains 22 of the polymer alignment film 16 relatively perpendicular to the electric vector direction are not cut and are kept intact.

Therefore, the molecular chains of polyimide perpendicular to the electric vector direction become longer than the molecular chains parallel to the electric vector direction and the ability for aligning liquid crystals increases. When liquid crystals are placed on this polyimide, they are aligned in the direction perpendicular to the electric vector direction.

Figure 5(c) is the sectional view of the structure of Figure 5(b) cut along the line A-A. As Figure 5(c) shows, laminated molecular chains 22 (main chains) in the polyimide layer have side chains 26 and 28. The side chains 26 and 28 extend laterally from the main chains with a specific angle determined by the polymer material used. Therefore, the liquid crystals are aligned in parallel to the surface of the substrate 10 with a pre-tilt angle of zero degrees.

Next, as Figure 5(d) shows, the substrate 10 is first rotated 90 degrees around the normal line of the substrate, and tilt irradiation is performed on the ultra-violet light irradiation region 32 slanted by a predetermined angle to the electric vector direction against the surface of the substrate 10 using linearly polarized ultra-violet light. As the arrow b in Figure 5(d) indicates, the electric vector direction of the ultra-violet light is perpendicular to the electric vector direction, a, in the first irradiation indicated by x, and is slanted against the surface of the polyimide.

By this, among molecular chains in various directions against the substrate, molecular chains parallel to the electric vector direction are shortened, and molecular chains slanted more from the electric vector direction remain longer. Of side chains 26 and 28, side chains 28 more parallel to the electric vector direction absorb more ultra-violet light, and are cut shorter.

Therefore, the aligning ability of the side chains 26 in the opposite direction increases, and by the second irradiation of ultra-violet light, a pre-tilt angle is formed in parallel to the incident direction of the ultra-violet light (Figure 5 (e)).

By the use of the method and device for controlling liquid crystal alignment according to the present invention as described above, since alignment is achieved without using rubbing, the generation of static electricity and dust is prevented, and since only irradiation by ultra-violet light is performed, no other additional steps are required.

Also according to the above method, since various polymer materials may be used as the material for the alignment film, the alignment characteristics may be controlled easily. Furthermore, since the alignment direction may be changed easily, and the alignment direction may be changed partially on the substrate, the method may be applied to the multi-domain method, in which a pixel of liquid crystal display pixels is divided and different alignment directions are formed for different regions, by irradiating the glass substrate by ultra-violet light scanning from varied directions.

The present invention is not limited to the above embodiment, but various modification may be performed.

For example, although a deep ultra-violet light having a wavelength between 200 and 300 nm is used as light from the light source in the above embodiment, the present invention is not limited to such a wavelength, but other electromagnetic waves, e.g., vacuum ultra-violet light (a wavelength of 200 nm or below) or ultra-violet light (a wavelength between 300 and 400 nm) may be used corresponding to absorption characteristics of materials of polymer.

According to the present invention, an alignment film may be formed on a substrate without generation of static electricity and dust; the alignment direction and pre-tilt angle may be changed easily; and the alignment direction may be changed partially on the substrate.

## Claims

1. A method for controlling liquid crystal alignment in a liquid crystal display device comprising:
irradiating linearly polarized ultra-violet light to a polymer alignment film formed on a substrate;
rotating an electric vector direction of said linearly polarized ultra-violet light; and
irradiating said linearly polarized ultra-violet light diagonally to said polymer alignment film.

2. A method for controlling liquid crystal alignment according to claim 1 , wherein the angle of rotation of said electric vector direction is about 90 degrees.

3. A method for controlling liquid crystal alignment in a liquid crystal display device comprising:
irradiating linearly polarized ultra-violet light to a polymer alignment film formed on a substrate in a predetermined electric vector direction for aligning liquid crystals in the direction perpendicular to said electric vector direction;
rotating the electric vector direction about 90 degrees in the surface of said alignment film; and
irradiating ultra-violet light diagonally to said polymer alignment film in a polarizing surface to determine a pre-tilt angle.

4. A device for controlling liquid crystal alignment comprising:
an ultra-violet light source for radiating linearly polarized ultra-violet light;
an irradiating light tilting means for relatively tilting said linearly polarized ultra-violet light radiated from said ultra-violet light source by a predetermined angle to the normal line of a substrate; and
an electric vector direction changing means for radiating said ultra-violet light in a predetermined electric vector direction to the reference direction of said substrate.

5. A liquid crystal display device including a layer of liquid crystals and a polymer alignment film formed on a substrate, said polymer alignment film having molecular chains aligned in the direction of the liquid crystals which are longer than those aligned perpendicular to the direction of the liquid crystals.
